(19) **Europäisches Patentamt**
**European Patent Office**
**Office européen des brevets**

(11) **EP 3 877 776 B1**

(12) **EUROPÄISCHE PATENTSCHRIFT**

(45) Veröffentlichungstag und Bekanntmachung des Hinweises auf die Patenterteilung:
**01.01.2025 Patentblatt 2025/01**

(21) Anmeldenummer: **19748651.7**

(22) Anmeldetag: **12.07.2019**

(51) Internationale Patentklassifikation (IPC):
**G01S 7/40** *(2006.01)*    **G01S 7/497** *(2006.01)*
**G01S 13/86** *(2006.01)*    **G01S 17/87** *(2020.01)*
**G01S 17/02** *(2020.01)*

(52) Gemeinsame Patentklassifikation (CPC):
**G01S 13/867; G01S 7/40; G01S 7/497; G01S 17/86**

(86) Internationale Anmeldenummer:
**PCT/DE2019/100650**

(87) Internationale Veröffentlichungsnummer:
**WO 2020/094170 (14.05.2020 Gazette 2020/20)**

(54) **VERFAHREN UND VERARBEITUNGSEINHEIT ZUR ERMITTLUNG VON INFORMATION IN BEZUG AUF EIN OBJEKT IN EINEM UMFELD EINES FAHRZEUGS**

METHOD AND PROCESSING UNIT FOR DETERMINING INFORMATION WITH RESPECT TO AN OBJECT IN AN ENVIRONMENT OF A VEHICLE

PROCÉDÉ ET UNITÉ DE TRAITEMENT SERVANT À DÉTERMINER UNE INFORMATION CONCERNANT UN OBJET DANS UN CHAMP ENVIRONNANT D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.11.2018 DE 102018127990**

(43) Veröffentlichungstag der Anmeldung:
**15.09.2021 Patentblatt 2021/37**

(73) Patentinhaber: **Bayerische Motoren Werke Aktiengesellschaft**
**80809 München (DE)**

(72) Erfinder:
• **STEYER, Sascha**
**80804 München (DE)**
• **TANZMEISTER, Georg**
**80804 München (DE)**

(56) Entgegenhaltungen:
**EP-A1- 3 438 777      WO-A1-2015/144741**
**WO-A2-03/107067      US-A1- 2017 262 716**

**Beschreibung**

Die Erfindung betrifft ein Verfahren und eine entsprechende Verarbeitungseinheit, die es z.B. einem Fahrzeug ermöglichen, ein Umgebungs-Objekt auf Basis von Sensordaten von unterschiedlichen Typen von Sensoren zu erkennen und/oder zu verfolgen.

Ein Fahrzeug umfasst typischerweise eine Mehrzahl von unterschiedlichen Umfeldsensoren, die eingerichtet sind, unterschiedliche Sensordaten bezüglich eines Umfelds des Fahrzeugs zu erfassen. Beispielhafte Umfeldsensoren sind Radarsensoren, Ultraschallsensoren, Lidar-Sensoren, Bildsensoren bzw. Bildkameras, etc. Auf Basis der Sensordaten der ein oder mehreren Umfeldsensoren eines Fahrzeugs können ein oder mehrere Umgebungs-Objekte (z.B. ein oder mehrere andere Fahrzeuge) in einem Umfeld des Fahrzeugs detektiert werden.

Unterschiedliche Typen von Umfeldsensoren haben typischerweise jeweils unterschiedliche Vorteile in Bezug auf die Erfassung des Umfelds eines Fahrzeugs. Beispielsweise können auf Basis der Bilddaten einer Bildkamera in präziser Weise Attribute eines Objektes, wie z.B. der Typ eines Objektes (etwa ein Fahrzeug, ein Fußgänger, ein Fahrradfahrer, ein Motorradfahrer, etc.), die Farbe eines Objekts und/oder die Form eines Objektes, ermittelt werden. Weitere beispielhafte Attribute sind der Zustand einer Komponente (z.B. einer Rückleuchte oder eines Blinkers) eines Objektes. Des Weiteren können auf Basis der Bilddaten einer Bildkamera unterschiedliche Objekte meist relativ gut voneinander abgegrenzt bzw. segmentiert werden (z.B. Objekte, die relativ nah beieinander angeordnet sind). Andererseits kann der Abstand eines Objektes zu dem Fahrzeug typischerweise nicht in präziser Weise auf Basis der Bilddaten einer Bildkamera ermittelt werden. Die Sensordaten eines Radar- und/oder Lidar-(light detection and ranging) Sensors ermöglichen es, den Abstand eines Objektes zu dem Fahrzeug in präziser Weise zu ermitteln. Andererseits können auf Basis der Sensordaten eines Radar- und/oder Lidarsensors typischerweise nur relativ wenige Attribute eines Objektes ermittelt werden. Ggf. kann mit den Sensordaten eines Lidarsensors der Typ eines Objektes ermittelt werden. Der Zustand von Komponenten eines Objektes (z.B. einer Rückleuchte bzw. eines Blinkers) kann jedoch typischerweise nicht auf Basis der Sensordaten eines Radar- und/oder Lidarsensors ermittelt werden.

US 2017/262716 A1 beschreibt eine Vorrichtung zur Erkennung von Objekten. WO 03/107067 A2 beschreibt ein Verfahren zur Sichtbarmachung der Umgebung eines Fahrzeugs.

Das vorliegende Dokument befasst sich mit der technischen Aufgabe, ein Verfahren und eine entsprechende Verarbeitungseinheit bereitzustellen, durch die eine zuverlässige Fusion der Sensordaten von mehreren unterschiedlichen Typen von Umfeldsensoren ermöglicht wird, insbesondere um in präziser Weise Information in Bezug auf Umgebungs-Objekte zu ermitteln.

Die Aufgabe wird durch die unabhängigen Ansprüche gelöst. Vorteilhafte Ausführungsformen werden u.a. in den abhängigen Ansprüchen beschrieben. Es wird darauf hingewiesen, dass zusätzliche Merkmale eines von einem unabhängigen Patentanspruch abhängigen Patentanspruchs ohne die Merkmale des unabhängigen Patentanspruchs oder nur in Kombination mit einer Teilmenge der Merkmale des unabhängigen Patentanspruchs eine eigene und von der Kombination sämtlicher Merkmale des unabhängigen Patentanspruchs unabhängige Erfindung bilden können, die zum Gegenstand eines unabhängigen Anspruchs, einer Teilungsanmeldung oder einer Nachanmeldung gemacht werden kann. Dies gilt in gleicher Weise für in der Beschreibung beschriebene technische Lehren, die eine von den Merkmalen der unabhängigen Patentansprüche unabhängige Erfindung bilden können.

Gemäß einem Aspekt wird eine Verarbeitungseinheit (z.B. ein Steuergerät mit einem Mikroprozessor) für ein Fahrzeug, insbesondere für ein Kraftfahrzeug, beschrieben. Die Verarbeitungseinheit kann dazu genutzt werden, ein oder mehrere Umgebungs-Objekte in einem Umfeld des Fahrzeugs zu detektieren und nachzuverfolgen. Des Weiteren kann die Verarbeitungseinheit dazu genutzt werden, das Fahrzeug in Abhängigkeit von den ein oder mehreren detektierten Umgebungs-Objekten zumindest teilweise automatisiert zu führen.

Das Fahrzeug kann ein oder mehreren Kameras umfassen, die eingerichtet sind, Bilddaten in Bezug auf das Umfeld des Fahrzeugs zu erfassen. Die Bilddaten können eine zeitliche Sequenz von Bildern (für eine entsprechende Sequenz von Zeitpunkten) umfassen. Des Weiteren kann das Fahrzeug ein oder mehrere abstandssensierende Umfeldsensoren (wie z.B. einen Radarsensor und/oder einen Lidarsensor) umfassen, die eingerichtet sein, Sensordaten in Bezug auf das Umfeld des Fahrzeugs zu erfassen. Dabei können die Sensordaten für einen bestimmten Zeitpunkt eine Vielzahl von detektierten Punkten (jeweils mit einem Abstandswert bezüglich des Abstands des jeweiligen Punktes zu dem Umfeldsensor) anzeigen.

Die Verarbeitungseinheit ist eingerichtet, Bilddaten zumindest einer Kamera des Fahrzeugs zu ermitteln, wobei die Bilddaten das Umfeld des Fahrzeugs ausgehend von einem Referenzpunkt (z.B. ausgehend von der Kamera) anzeigen. Des Weiteren ist die Verarbeitungseinheit eingerichtet (z.B. unter Verwendung von ein oder mehreren Bildverarbeitungs-Algorithmen), auf Basis der Bilddaten zumindest ein Kamera-Objekt in dem Umfeld des Fahrzeugs zu detektieren. Beispielsweise können auf Basis der Bilddaten die Konturen eines Objektes detektiert werden. Des Weiteren kann auf Basis der Bilddaten ggf. der Typ eines Objektes (z.B. Fahrzeug, Fußgänger, Fahrradfahrer, etc.) ermittelt werden. Andererseits kann meist der Abstand des Kamera-Objektes zu dem Referenzpunkt nur relativ ungenau auf Basis der Bilddaten bestimmt werden.

Die Verarbeitungseinheit ist ferner eingerichtet, Sensordaten zumindest eines abstandssensierenden Umfeldsensors des Fahrzeugs zu ermitteln, wobei die Sensordaten eine Vielzahl von detektierten Punkten in dem Umfeld des Fahrzeugs anzeigen. Des Weiteren können die Sensordaten für jeden detektierten Punkt einen Abstand des Punktes anzeigen, insbesondere relativ zu dem Referenzpunkt. Die Sensordaten des abstandssensierenden Umfeldsensors und die Bilddaten könnten zeitlich synchronisiert sein (z.B. für den gleichen Zeitpunkt erfasst worden sein).

Typischerweise sind die Kamera und der Umfeldsensor an unterschiedlichen Stellen an dem Fahrzeug angeordnet. Als Folge daraus können die Bilddaten von der Kamera und die Sensordaten von dem Umfeldsensor in jeweils unterschiedlichen Koordinatensystemen bereitgestellt werden. Dabei sind die Koordinatensysteme der Kamera und des Umfeldsensors typischerweise über eine im Vorfeld bekannte Transformation (z.B. eine Rotation und/oder eine Translation) ineinander überführbar.

Die Verarbeitungseinheit kann eingerichtet sein, das Kamera-Objekt und die Sensordaten des Umfeldsensors in einem gemeinsamen Koordinatensystem darzustellen (so dass sowohl das Kamera-Objekt als auch die Sensordaten auf einen gemeinsamen Referenzpunkt bezogen werden können). Dies kann insbesondere durch eine Projektion des Kamera-Objektes in das Koordinatensystem des Umfeldsensors oder durch eine Projektion der Sensordaten in das Koordinatensystem der Kamera erfolgen (mittels der im Vorfeld bekannten Transformation). So kann eine präzise Verarbeitung der Bilddaten und der Sensordaten für die Erkennung von Umgebungs-Objekten ermöglicht werden.

Die Verarbeitungseinheit kann ferner eingerichtet sein, das Kamera-Objekt an eine Vielzahl von unterschiedlichen Abständen zu dem Referenzpunkt zu verschieben bzw. das Kamera-Objekt (nacheinander) in mehreren unterschiedlichen Abständen zu dem Referenzpunkt zu platzieren. Dabei kann das Kamera-Objekt insbesondere entlang eines von dem Referenzpunkt ausgehenden Strahls verschoben werden, um den radialen Abstand zu dem Referenzpunkt zu verändern. Des Weiteren kann das Kamera-Objekt in Abhängigkeit von dem jeweiligen Abstand zu dem Referenzpunkt skaliert (d.h. vergrößert oder verkleinert) werden. Insbesondere kann das Kamera-Objekt verkleinert werden, wenn das Kamera-Objekt zu dem Referenzpunkt hin verschoben wird. Andererseits kann das Kamera-Objekt vergrößert werden, wenn das Kamera-Objekt von dem Referenzpunkt weg verschoben wird. Es können somit unterschiedliche Hypothesen in Bezug auf den Abstand des Kamera-Objektes zu dem Referenzpunkt betrachtet werden.

Die Verarbeitungseinheit kann eingerichtet sein, (ggf. allein) auf Basis der Bilddaten einen geschätzten Abstand des Kamera-Objekts zu dem Referenzpunkt zu ermitteln. Das Kamera-Objekt kann dann in einem bestimmten Abstandsbereich um den geschätzten Abstand herum verschoben werden, um das Kamera-Objekt an die Vielzahl von unterschiedlichen Abständen zu verschieben. Der Abstandsbereich kann z.B. ausgehend von dem geschätzten Abstand eine Verschiebung um 20%, 30% oder mehr des geschätzten Abstands zu dem Referenzpunkt hin und/oder von dem Referenzpunkt weg definieren. Innerhalb der Abstandsbereichs können dann unterschiedliche Abstände (z.B. 20, 30, 50, 100 oder mehr unterschiedliche (ggf. äquidistante) Abstände) ausgewählt werden.

Des Weiteren ist die Verarbeitungseinheit eingerichtet, für die Vielzahl von unterschiedlichen Abständen eine entsprechende Vielzahl von Werten eines Überlappungsmaßes des jeweiligen (verschobenen und/oder skalierten) Kamera-Objektes mit detektierten Punkten der Sensordaten zu ermitteln. Dabei kann das Überlappungsmaß anzeigen, wie stark das (jeweils verschobene und/oder skalierte) Kamera-Objekt mit detektierten Punkten der Sensordaten des abstandssensierenden Umfeldsensors überlappt. Eine relativ starke Überlappung zeigt dabei an, dass die detektierten Punkte der Sensordaten des abstandssensierenden Umfeldsensors ein dem Kamera-Objekt entsprechendes Umgebungs-Objekt (in dem durch die detektierten Punkte angezeigten Abstand zu dem Referenzpunkt) anzeigen. Andererseits zeigt eine relativ niedrige Überlappung an, dass sich in dem Abstand, in dem das Kamera-Objekt platziert wurde, vermutlich kein Umgebungs-Objekt befindet.

Außerdem kann die Verarbeitungseinheit eingerichtet sein, in Abhängigkeit von der Vielzahl von Werten des Überlappungsmaßes einen Objekt-Abstand des Kamera-Objektes von dem Referenzpunkt zu ermitteln. Insbesondere kann dabei der Abstand aus der Vielzahl von unterschiedlichen Abständen als Objekt-Abstand ausgewählt werden, für den der ermittelte Wert des Überlappungsmaßes eine besonders große Überlappung zwischen dem Kamera-Objekt und den detektieren Punkten der Sensordaten anzeigt. Insbesondere kann der dem maximalen oder minimalen Wert des Überlappungsmaßes entsprechende Abstand als Objekt-Abstand ausgewählt werden. Der ermittelte Objekt-Abstand kann dann bei der Ermittlung von Information in Bezug auf Umgebungs-Objekte in dem Umfeld des Fahrzeugs berücksichtigt werden. So kann in effizienter Weise die Detektionsgüte von Umgebungs-Objekten erhöht werden.

Alternativ oder ergänzend zu der Ermittlung eines Objekt-Abstands kann das Kamera-Objekt in Abhängigkeit von der Vielzahl von Werten des Überlappungsmaßes einer Teilmenge von detektierten Punkten der Sensordaten zugewiesen bzw. damit assoziiert werden. Objekt-relevante Informationen aus den Bilddaten können dann in präziser Weise bei der Erkennung von Umgebungs-Objekten auf Basis der Sensordaten des abstandssensierenden Umfeldsensors berücksichtigt werden. So kann in effizienter Weise die Detektionsgüte von Umgebungs-Objekten erhöht werden.

Durch die Veränderung des Abstands eines Kamera-Objektes bei der Überlagerung von Bilddaten einer Bildkamera und Sensordaten eines abstandssensierenden Umfeldsensors können fehlerhafte Kalibrierungen zwischen der Bildkamera und dem abstandssensierenden Umfeldsensor und/oder Fehler bei der zeitlichen Synchronisation zwischen Bilddaten und Sensordaten in zuverlässiger Weise ausgeglichen werden.

Die Verarbeitungseinheit kann eingerichtet sein, einen Winkelbereich, insbesondere einen Azimut-Winkelbereich und/oder einen Höhen-Winkelbereich, um den Referenzpunkt für das Kamera-Objekt zu ermitteln. Dabei kann der Winkelbereich derart ermittelt werden, dass den Winkelbereich begrenzende, von dem Referenzpunkt ausgehende Strahlen das Kamera-Objekt an zwei unterschiedlichen Seiten des Kamera-Objektes (genau) eingrenzen, optional mit einem zusätzlichen Toleranzpuffer an den zwei unterschiedlichen Seiten des Kamera-Objektes. Es kann somit der Teilbereich des Umfelds des Fahrzeugs eingegrenzt werden, in dem nach detektierten Punkten, die dem Kamera-Objekt entsprechen könnten, gesucht wird. Insbesondere kann das Verschieben des Kamera-Objektes (ausschließlich) innerhalb des von den ein oder zwei Winkelbereichen (d.h. dem Azimut-Winkelbereich und/oder dem Höhen-Winkelbereich) definierten Teilbereich des Umfelds des Fahrzeugs erfolgen. Dabei kann das Kamera-Objekt derart verschoben und skaliert werden (ausgehend von dem geschätzten Abstand des Kamera-Objektes), dass das Kamera-Objekt stets innerhalb der den Winkelbereich bzw. die Winkelbereich begrenzenden Strahlen verbleibt.

Das Kamera-Objekt kann somit innerhalb des vom dem Winkelbereich bzw. von den Winkelbereichen definierten Teilbereichs des Umfelds des Fahrzeugs entlang eines von dem Referenzpunkt ausgehenden Strahls verschoben werden. Einen Wert des Überlappungsmaßes des jeweiligen (verschobenen und/oder skalierten) Kamera-Objektes kann dann (insbesondere ausschließlich) mit detektierten Punkten der Sensordaten aus dem von dem Winkelbereich bzw. von den Winkelbereichen definierten Teilbereich des Umfelds des Fahrzeugs ermittelt werden. So können die Genauigkeit und die Effizienz der Ermittlung des Objekt-Abstands und/oder der Zuordnung eines Kamera-Objekts zu den detektieren Punkten eines abstandssensierenden Umfeldsensors erhöht werden.

Der Azimut-Winkelbereich kann z.B. in horizontaler Richtung auf Basis der Bilddaten und/oder auf Basis der Sensordaten ermittelt werden. In entsprechender Weise kann der Höhen-Winkelbereich in vertikaler Richtung auf Basis der Bilddaten und/oder auf Basis der Sensordaten ermittelt werden. Durch die Berücksichtigung des Azimut-Winkelbereichs und des Höhen-Winkelbereichs in Kombination können die Genauigkeit des ermittelten Objekt-Abstands und/oder der Zuordnung eines Kamera-Obj ekts zu den detektieren Punkten eines abstandssensierenden Umfeldsensors weiter erhöht werden.

Das Kamera-Objekt kann eine Vielzahl von Kamera-Punkten in dem Umfeld des Fahrzeugs anzeigen, an denen das Kamera-Objekt angeordnet ist. Die Kamera-Punkte können z.B. durch einen Polygonzug (insbesondere durch einen Quader) beschrieben werden. Das Verschieben des Kamera-Objektes kann dann das Verschieben zumindest einiger der Vielzahl von Kamera-Punkten umfassen (insbesondere entlang eines von dem Referenzpunkt ausgehenden Strahls). Des Weiteren können im Rahmen des Verschiebens Punkte ergänzt oder verworfen werden (um das Kamera-Objekt zu vergrößern oder zu verkleinern). Durch die Betrachtung von einzelnen Kamera-Punkten zur Beschreibung eines Kamera-Objektes kann die Genauigkeit der Ermittlung einer Überlappung zwischen einem Kamera-Objekt und einer Teilmenge von detektierten Punkten der Sensordaten erhöht werden.

Insbesondere kann das Ermitteln eines Wertes des Überlappungsmaßes bei Berücksichtigung von einzelnen Kamera-Punkten zur Beschreibung eines Kamera-Objektes umfassen, das Ermitteln eines Anteils der Vielzahl von Kamera-Punkten des Kamera-Objektes, die mit detektieren Punkten der Sensordaten zusammenfallen. Alternativ oder ergänzend kann das Ermitteln eines Wertes des Überlappungsmaßes das Ermitteln eines Abstands (z.B. eines mittleren Abstands) der Vielzahl von Kamera-Punkten des Kamera-Objektes zu detektieren Punkten der Sensordaten umfassen. Alternativ oder ergänzend kann das Ermitteln eines Wertes des Überlappungsmaßes das Ermitteln eines Grades der Überlappung der Vielzahl von Kamera-Punkten des Kamera-Objektes mit detektieren Punkten der Sensordaten umfassen. So kann die Überlappung zwischen einem Kamera-Punkt und detektieren Punkten der Sensordaten in präziser Weise ermittelt werden.

Die Verarbeitungseinheit kann eingerichtet sein, in Abhängigkeit von dem ermittelten Objekt-Abstand das Kamera-Objekt einer Teilmenge der Vielzahl von detektierten Punkten zuzuordnen. Des Weiteren kann die Verarbeitungseinheit eingerichtet sein, auf Basis der Sensordaten unter Berücksichtigung des zugeordneten Kamera-Objektes ein Belegungsraster (auf Englisch "Occupancy Grid") des Umfelds des Fahrzeugs zu ermitteln. Dabei kann das Belegungsraster für eine Vielzahl von Zellen des Umfelds des Fahrzeugs jeweils eine Wahrscheinlichkeit dafür anzeigen, ob die jeweilige Zelle frei ist (und damit ggf. für das Fahrzeug befahrbar ist) oder ob die jeweilige Zelle durch ein Objekt belegt ist (und somit zu einer Kollision mit dem Fahrzeug führen könnte). Durch die Bereitstellung eines Belegungsrasters können Umgebungs-Objekte in präziser Weise detektiert und nachverfolgt werden (an einer Sequenz von aufeinanderfolgenden Zeitpunkten). Somit kann das zumindest teilweise automatisierte Fahren eines Fahrzeugs weiter verbessert werden.

Die Verarbeitungseinheit kann somit eingerichtet sein, auf Basis der Sensordaten ein Belegungsraster des Umfelds des Fahrzeugs zu ermitteln. Des Weiteren kann die Verarbeitungseinheit eingerichtet sein, auf Basis des Belegungsrasters unter Berücksichtigung des Kamera-Objektes in dem ermittelten Objekt-Abstand zu dem Referenzpunkt ein dem Kamera-Objekt entsprechendes Umgebungs-Objekt in dem Umfeld des Fahrzeugs zu detektieren. Es können dann in zuverlässiger Weise auf Basis der Bilddaten ein oder mehrere Attribute, insbesondere ein Objekt-Typ aus einer Mehrzahl von unterschiedlichen Objekt-Typen, des Umgebungs-Objektes ermittelt werden. Die in diesem Dokument beschriebene Fusion zwischen Bilddaten und Sensordaten eines abstandssensierenden Umfeldsensors ermöglicht somit die zuverlässige Ermittlung von weitergehender Information zu Umgebungs-Objekten.

Die Verarbeitungseinheit kann eingerichtet sein, auf Basis der Vielzahl von Werten des Überlappungsmaßes zu bestimmen, ob das Kamera-Objekt einer Teilmenge der Vielzahl von detektierten Punkten zugeordnet werden kann oder nicht. Zu diesem Zweck können die Werte des Überlappungsmaßes mit einem Überlappungs-Schwellenwert verglichen werden, wobei der Überlappungs-Schwellenwert einen Minimalwert bzw. einen Maximalwert des Überlappungsmaßes anzeigt, der mindestens bzw. maximal vorliegen muss, um davon ausgehen zu können, dass das Kamera-Objekt einem in den Sensordaten des abstandssensierenden Umfeldsensors erkennbaren Objekt entspricht. Der Überlappungs-Schwellenwert kann im Vorfeld (z.B. experimentell) ermittelt werden. Alternativ oder ergänzend kann der Überlappungs-Schwellenwert mittels maschinellen Lernens automatisiert ermittelt, d.h. angelernt, werden.

Die Auswerteeinheit ist ferner eingerichtet, das Kamera-Objekt bei der Ermittlung des Belegungsrasters des Umfelds des Fahrzeugs unberücksichtigt zu lassen, wenn bestimmt wurde, dass das Kamera-Objekt keiner Teilmenge der Vielzahl von detektierten Punkten zugeordnet werden kann. Andererseits kann die Auswerteeinheit eingerichtet sein, das Kamera-Objekt bei der Ermittlung des Belegungsrasters des Umfelds des Fahrzeugs auf Basis der Sensordaten gemäß dem ermittelten Objekt-Abstand zu berücksichtigen (insbesondere nur dann), wenn bestimmt wurde, dass das Kamera-Objekt einer Teilmenge der Vielzahl von detektierten Punkten zugeordnet werden kann. So können die Robustheit und die Zuverlässigkeit der Objekt-Erkennung weiter erhöht werden.

Die Vielzahl von detektierten Punkten der Sensordaten kann zumindest einen möglichen Nicht-Hindernis-Punkt, insbesondere einen möglichen Boden-Punkt, umfassen. Insbesondere kann ein detektierter Punkt des abstandssensierenden Umfeldsensors als Hindernis-Punkt klassifiziert werden, der (wahrscheinlich) zu einem im Umfeld des Fahrzeugs angeordneten Umgebungs-Objekt gehört, das ein Hindernis darstellt. Andererseits kann ein detektierter Punkt des abstandssensierenden Umfeldsensors als Nicht-Hindernis-Punkt klassifiziert werden, der (wahrscheinlich) nicht zu einem Umgebungs-Objekt gehört, sondern auf Rauschen, auf den Boden, oder auf ein unterfahrbares Objekt (wie z.B. einen Tunnel oder eine Brücke) zurückzuführen ist.

Der mögliche Nicht-Hindernis-Punkt, insbesondere der Boden-Punkt, kann z.B. auf Basis von Höheninformation in den Sensordaten des abstandssensierenden Umfeldsensors detektiert werden. Obwohl der mögliche Nicht-Hindernis-Punkt möglicherweise keinem Umgebungs-Objekt in dem Umfeld des Fahrzeugs entspricht, können die Werte des Überlappungsmaßes ggf. dennoch unter Berücksichtigung des möglichen Nicht-Hindernis-Punktes ermittelt werden. So kann die Erkennungsgüte von Umgebungs-Objekten weiter erhöht werden (da mögliche Nicht-Hindernis-Punkte nicht von vornherein ausgeschlossen werden).

Andererseits kann der mögliche Nicht-Hindernis-Punkt bei der Ermittlung des Belegungsrasters unberücksichtigt bleiben, wenn dem Nicht-Hindernis-Punkt kein Kamera-Objekt zugeordnet wurde. Des Weiteren kann der mögliche Nicht-Hindernis-Punkt (insbesondere nur dann) bei der Ermittlung des Belegungsrasters berücksichtigt werden, wenn dem Nicht-Hindernis-Punkt ein Kamera-Objekt zugeordnet wurde. So kann die Zuverlässigkeit der Erkennung von Umgebungs-Objekten weiter erhöht werden.

Wie bereits oben dargelegt, kann die Verarbeitungseinheit eingerichtet sein, zumindest eine Fahrzeugfunktion des Fahrzeugs, insbesondere ein zumindest teilweise automatisiertes Fahren des Fahrzeugs, in Abhängigkeit von dem ermittelten Objekt-Abstand und/oder in Abhängigkeit von einem von dem ermittelten Objekt-Abstand abhängigen Belegungsraster des Umfelds des Fahrzeugs zu betreiben. So können in effizienter Weise zuverlässige Fahrzeugfunktionen bereitgestellt werden.

Gemäß einem weiteren Aspekt wird ein Verfahren zur Ermittlung von Information in Bezug auf ein Objekt in einem Umfeld eines Fahrzeugs beschrieben. Das Verfahren umfasst das Ermitteln von Bilddaten einer Kamera des Fahrzeugs, wobei die Bilddaten ein Umfeld des Fahrzeugs ausgehend von einem Referenzpunkt anzeigen. Außerdem umfasst das Verfahren das Detektieren zumindest eines Kamera-Objektes in dem Umfeld des Fahrzeugs auf Basis der Bilddaten. Ferner umfasst das Verfahren das Ermitteln von Sensordaten eines abstandssensierenden Umfeldsensors des Fahrzeugs. Des Weiteren umfasst das Verfahren das Verschieben des Kamera-Objektes an eine Vielzahl von unterschiedlichen Abständen relativ zu dem Referenzpunkt, sowie das Ermitteln einer Vielzahl von Werten eines Überlappungsmaßes des jeweiligen Kamera-Objektes mit den Sensordaten für die Vielzahl von unterschiedlichen Abständen. Es kann dann in Abhängigkeit von der Vielzahl von Werten des Überlappungsmaßes ein Objekt-Abstand des Kamera-Objektes von dem Referenzpunkt ermittelt werden.

Gemäß einem weiteren Aspekt wird ein (Straßen-)Kraftfahrzeug (insbesondere ein Personenkraftwagen oder ein Lastkraftwagen oder ein Bus) beschrieben, das die in diesem Dokument beschriebene Verarbeitungseinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch das in diesem Dokument beschriebene Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch das in diesem Dokument beschriebene Verfahren auszuführen.

Es ist zu beachten, dass die in diesem Dokument beschriebenen Verfahren, Vorrichtungen und Systeme sowohl alleine, als auch in Kombination mit anderen in diesem Dokument beschriebenen Verfahren, Vorrichtungen und Systemen verwendet werden können. Des Weiteren können jegliche Aspekte der in diesem Dokument beschriebenen Verfahren, Vorrichtungen und Systemen in vielfältiger Weise miteinander kombiniert werden. Insbesondere können die Merkmale der Ansprüche in vielfältiger Weise miteinander kombiniert werden.

Im Weiteren wird die Erfindung anhand von Ausführungsbeispielen näher beschrieben. Dabei zeigen

Figur 1 ein beispielhaftes Fahrzeug mit einer Mehrzahl von unterschiedlichen Umfeldsensoren;
Figur 2 ein beispielhaftes Raster einer Umgebung eines Fahrzeugs;
Figur 3 eine beispielhafte Überlagerung eines Kamera-Objektes mit einem Lidarbasierten Belegungsraster;
Figur 4 ein Ablaufdiagramm eines beispielhaften Verfahrens zur Ermittlung von Information in Bezug auf ein Umgebungs-Objekt; und
Figur 5 eine beispielhafte Überlagerung eines Kamera-Objektes mit den Sensordaten eines abstandssensierenden Umfeldsensors.

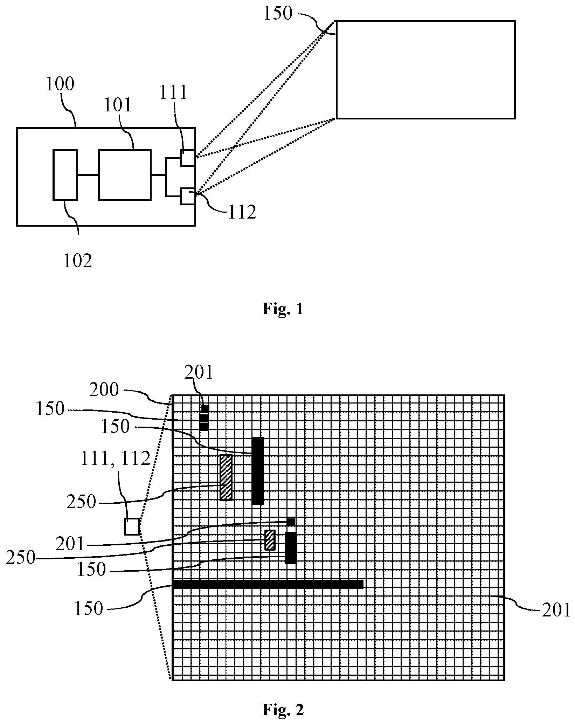

Wie eingangs dargelegt, befasst sich das vorliegende Dokument mit der Detektion und der Nachverfolgung zumindest eines Umgebungs-Objektes auf Basis von Sensordaten von mehreren Umfeldsensoren. In diesem Zusammenhang zeigt Fig. 1 ein Fahrzeug 100 mit ein oder mehreren Umfeldsensoren 111, 112 zur Erfassung von Sensordaten. Das Fahrzeug 100 umfasst weiter eine Verarbeitungseinheit 101, die eingerichtet ist, auf Basis der Sensordaten ein Objekt 150 im Umfeld des Fahrzeugs 100 zu detektieren. Ein detektiertes Objekt 150 kann dann in einer Fahrzeugfunktion 102 (z.B. für das teilautomatisierte oder hochautomatisierte Fahren des Fahrzeugs 100) verwendet werden.

Das vorliegende Dokument befasst sich insbesondere mit der konsistenten multisensoriellen Modellierung der Umgebung eines Fahrzeuges 100. Dabei kann die lokale Umgebung als Occupancy Grid Map bzw. Raster 200 geschätzt bzw. dargestellt werden (siehe Fig. 2). Fig. 2 zeigt ein beispielhaftes Raster 200 einer Umgebung des Fahrzeugs 100 mit einer Vielzahl von Rasterzellen oder kurz Zellen 201. Das Raster 200 kann die Umgebung bzw. das Umfeld des Fahrzeugs 100 in die Vielzahl von zwei- (2D) oder drei-dimensionalen (3D) Zellen 201 aufteilen. Eine zwei-dimensionale Zelle 201 kann dabei eine Rechteckform aufweisen (beispielsweise mit einer Kantenlänge von 10cm, 5cm, 2cm, 1cm oder weniger).

Die Verarbeitungseinheit 101 des Fahrzeugs 100 kann eingerichtet sein, auf Basis der Sensordaten für ein oder mehrere der Zellen 201 (insbesondere für jede Zelle 201) Messdaten zu ermitteln, die anzeigen, ob eine Zelle 201 an einem bestimmten Zeitpunkt t belegt ist oder nicht. Insbesondere können die Messdaten $z_c$ für eine Zelle c 201 anzeigen

$$z_c = \left( m\left( SD_{z,t} \right), m\left( F_{z,t} \right) \right),$$

wobei m({SD}) eine Evidenz bzw. Evidenzmasse dafür ist, dass die Zelle c 201 durch ein Objekt 150 belegt ist (z.B. ein statisches oder ein dynamisches Objekt), und wobei m(F) eine Evidenz dafür ist, dass die Zelle c 201 frei ist, und somit nicht durch ein Objekt 150 belegt ist. Die Evidenz dafür, dass die Zelle 201 durch eine Objekt 150 belegt ist, kann als Objekt-Wahrscheinlichkeit dafür betrachtet werden, dass die Zelle 201 durch ein Objekt 150 belegt ist (insbesondere im Sinne der Dempster-Shafer Theorie).

Typischerweise können auf Basis einer zeitlich isolierten Messung an einem bestimmten Zeitpunkt $t$ nur die Evidenzen bzw. Evidenzmassen m(SD), m(F) ermittelt werden, da nicht festgestellt werden kann, ob das Objekt durch ein statisches oder ein dynamisches Objekt 150 belegt ist. Es kann jedoch angenommen werden, dass nach einer Sequenz von Messungen (durch die Sensoren 111, 112) an einer entsprechenden Sequenz von Zeitpunkten an dem aktuellen Zeitpunkt $t$ ein Belegungsraster $\mathcal{M}_t$ 200 bereitgestellt werden kann, das für die unterschiedlichen Zellen 201 unterschiedliche Evidenzen für unterschiedliche Hypothesen anzeigt,

$$\mathcal{M}_t = \{ m(S_t), m(D_t), m(SD_t), m(F_t), m(FD_t) \},$$

wobei $m(FD_t)$ die Evidenz für die Hypothese anzeigt, dass eine in der Vergangenheit nicht-belegte Zelle 201 zum Zeitpunkt t durch ein dynamisches Objekt 150 belegt sein könnte. Des Weiteren zeigt $m(S_t)$ die Evidenz bzw. Evidenzmasse dafür an, dass die Zelle c 201 am Zeitpunkt t durch ein statisches Objekt 150 belegt ist. Außerdem zeigt $m(D_t)$ die Evidenz bzw. Evidenzmasse dafür an, dass die Zelle c 201 am Zeitpunkt t durch ein dynamisches Objekt 150 belegt ist. Das Belegungsraster $\mathcal{M}_t$ 200 beschreibt den Status bzw. den Zustand der Zellen 201 des Rasters 200 an einem bestimmten Zeitpunkt t.

Das Belegungsraster 200 kann z.B. auf Basis der Sensordaten von ein oder mehreren Umfeldsensoren 111 ermittelt werden, die jeweils eine relativ hohe Genauigkeit in Bezug auf den Abstand eines Objektes 150 zu dem jeweiligen Umfeldsensor 111 aufweisen. Folglich kann der Abstand der belegten Zellen 201 des Belegungsrasters 200 zu dem jeweiligen Umfeldsensor 111 als Referenzabstand für ein zu detektierenden Objekt betrachtet werden. Beispielhafte Umfeldsensoren 111 mit einer relativ präzisen Ermittlung des Abstands sind Lidarsensoren und/oder Radarsensoren.

Des Weiteren können die Sensordaten zumindest einer Bildkamera 112 verwendet werden, um ein Umgebungs-Objekt zu detektieren. Die Sensordaten einer Bildkamera 112 werden in diesem Dokument auch als Bilddaten bezeichnet. Die Verarbeitungseinheit 101 kann eingerichtet sein, auf Basis der Bilddaten ein oder mehrere Objekte 250 zu detektieren. Dabei wird ein auf Basis von Bilddaten detektiertes Objekt 250 in diesem Dokument als Kamera-Objekt bezeichnet.

Es kann somit auf Basis der Sensordaten eines abstandssensierenden Umfeldsensors 111 ein erstes Belegungsraster 200 und auf Basis von Bilddaten ein zweites Belegungsraster 200 ermittelt werden, die überlagert werden können, um ein gemeinsames bzw. fusioniertes Belegungsraster 200 zu ermitteln. Aufgrund der Tatsache, dass der Abstand eines Kamera-Objektes 250 typischerweise nur relativ ungenau auf Basis der Bilddaten bestimmt werden kann, kann die Überlagerung der beiden Belegungsraster 200 dazu führen, dass Objekte doppelt erkannt werden (mit unterschiedlichen Abständen) oder ggf. gar nicht erkannt werden. Die Überlagerung von Belegungsrastern 200 aus den Sensordaten von unterschiedlichen Typen von Umfeldsensoren 111, 112 kann somit zu einer relativ geringen Erkennungsgüte von Umgebungs-Objekten führen.

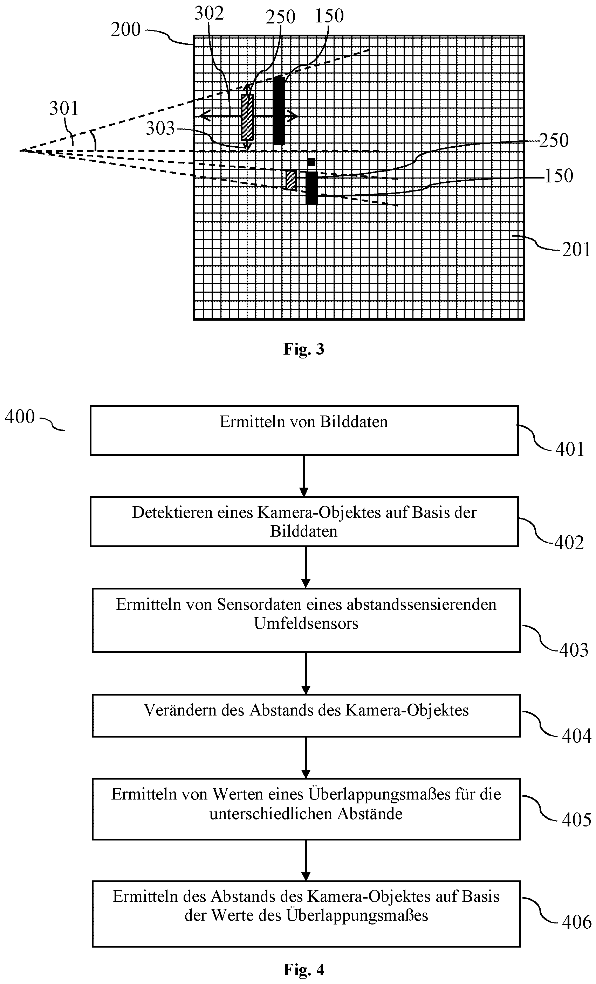

Dieses Problem kann dadurch vermieden werden, dass im Vorfeld zu einer Datenfusion eine Zuordnung der ein oder mehreren detektierten Kamera-Objekte 250 zu Zellen 201 eines auf Basis der Sensordaten eines abstandssensierenden Umfeldsensors 111 (z.B. auf Basis von Lidar- oder Radar-Sensordaten) ermittelten Belegungsrasters 200 erfolgt. Fig. 3 zeigt ein beispielhaftes Kamera-Objekt 250, das in ein auf Basis von Sensordaten eines abstandssensierenden Umfeldsensors 111 ermittelten Belegungsraster 200 übertragen bzw. transformiert wurde. Typischerweise sind die Kamera 112 zur Erfassung der Bilddaten und der Umfeldsensor 111 zur Erfassung der Sensordaten an unterschiedlichen Positionen an einem Fahrzeug 100 angeordnet. Die unterschiedlichen Positionen der Kamera 112 und des Umfeldsensors 111 sind bekannt und es kann somit im Vorfeld eine Transformation (z.B. mit sechs Freiheitsgraden, drei Freiheitsgrade für eine Translation und drei Freiheitsgrade für eine Rotation) ermittelt werden, die es ermöglicht, ein detektiertes Kamera-Objekt 250 aus dem Koordinatensystem der Kamera 112 in das Koordinatensystem eines abstandssensierenden Umfeldsensors 111 zu transformieren.

Ein detektiertes Kamera-Objekt 250 erstreckt sich (relativ zu einem bestimmten Referenzpunkt 305) über einen bestimmten Azimut-Winkelbereich 301. Der Referenzpunkt 305 kann z.B. der Position eines Sensors 111, 112 (z.B. der Kamera 112 und/oder des abstandssensierenden Umfeldsensors 111) in dem, dem Belegungsraster 200 zugrundeliegenden, Koordinatensystem entsprechen. Der Winkelbereich 301 kann dabei dem Winkel-Ausschnitt des Erfassungsbereichs der Kamera 112 entsprechen, in dem das Kamera-Objekt 250 liegt. Ggf. kann der Winkelbereich 301 um einen bestimmten Toleranzpuffer 303 an beiden Seiten des Kamera-Objekts 250 erweitert werden.

Der Abstand des Kamera-Objekts 250 zu dem Referenzpunkt 305 kann innerhalb des ermittelten Winkelbereichs 301 verändert werden (dargestellt durch den Doppelpfeil 302). Dabei kann das Kamera-Objekt 250 derart skaliert werden, dass sich das Kamera-Objekt 250 (ggf. unter Berücksichtigung von beidseitigen Toleranzpuffern 303) bei jedem Abstand über den gesamten Winkelbereich 301 erstreckt.

Für jeden Abstand kann der Wert eines Überlappungsmaßes für die Überlappung des (skalierten) Kamera-Objektes 250 mit den Zellen bzw. Punkten 201 des Belegungsraster 200 ermittelt werden. Das (skalierte und verschobene) Kamera-Objekt 250 kann z.B. für jede Zelle 201 des Belegungsrasters 200 eine Evidenzmasse dafür anzeigen, dass die Zelle 201 Teil des Kamera-Objekts 250 ist. Des Weiteren zeigt das Belegungsraster 200 für jede Zelle 201 die o.g. Evidenzmassen dafür an, dass die Zelle 201 belegt ist. Zur Ermittlung eines Wertes des Überlappungsmaßes kann

- für die Zellen 201, die von dem Winkelbereich 201 überdeckt werden, jeweils das Produkt der Evidenzmasse dafür, dass die Zelle 201 Teil des (skalierte und verschobene) Kamera-Objektes 250 ist, und der Evidenzmasse dafür, dass die Zelle 201 belegt ist, ermittelt werden; und
- die mittlere absolute oder quadratische Summe der Produkte ermittelt werden.

Es kann somit für eine Vielzahl von unterschiedlichen Abständen des Kamera-Objektes 250 jeweils ein Wert eines Überlappungsmaßes ermittelt werden. Des Weiteren kann basierend auf den Werten des Überlappungsmaßes der Objekt-Abstand des Kamera-Objektes 250 ermittelt werden, bei dem eine besonders gute, insbesondere eine optimale, Überlappung zwischen dem (skalierten und verschobenen) Kamera-Objekt 250 und dem Belegungsraster 200 besteht. Dieses skalierte und verschobene Kamera-Objekt 250 kann dann mit den Zellen 201 des Belegungsrasters 200 fusioniert werden, und bei der Erkennung von Umgebungs-Objekten berücksichtigt werden. So kann die Erkennungsgüte von Umgebungs-Objekten erhöht werden.

Alternativ oder ergänzend können (anstatt in einem ersten Schritt aus den Sensordaten von unterschiedlichen Sensoren 111, 112 jeweils individuelle Grids 200 abzuleiten und diese danach zellbasiert zu fusionieren) ein oder mehrere detektierte Kamera-Objekte 250 direkt mit den Sensordaten eines abstandssensierenden Umfeldsensors 111 (z.B. eines Laserscanners) fusioniert werden. Erst im Anschluss daran kann dann ggf. ein Scan Grid 200 auf Basis der bereits fusionierten Information abgeleitet werden.

Die Fusion bzw. Assoziation zwischen einem Kamera-Objekt 250 und den Sensordaten eines abstandssensierenden Umfeldsensors 100 kann wie erfolgen:

- Ein Kamera-Objekt 250 ist typischerweise relativ zu einem Koordinatensystem der Kamera 112 beschrieben, mit der die Bilddaten zur Detektion des Kamera-Objektes 250 erfasst wurden. Die Sensordaten eines abstandssensierenden Umfeldsensors 111 (z.B. eines Lidarsensors) können dann durch eine Transformation (Translation und/oder Rotation) in das 3D-Koordinatensystem der Kamera 112 projiziert bzw. transformiert werden. Alternativ kann, wie oben beschrieben, eine Transformation des Kamera-Objektes 250 in das Koordinatensystem des abstandssensierenden Umfeldsensors 111 erfolgen.
- Es kann dann der Azimut-Winkelbereich 301 ermittelt werden, der durch das Kamera-Objekt 250 aufgespannt wird (ggf. mit einem addierten Toleranz-Delta bzw. Toleranzpuffer 303 jeweils links und rechts von dem Kamera-Objekt 250).
- Des Weiteren können die Sensordaten des abstandssensierenden Umfeldsensors 111 extrahiert werden, die innerhalb dieses Azimut-Winkelbereichs 301 liegen.
- Das Kamera-Objekt 250 kann an verschiedene Abstandswerte gesetzt und dementsprechend skaliert werden. Für jeden Abstandswert kann der Wert einer Gütefunktion (d.h. der Wert eines Überlappungsmaßes) berechnet werden, wobei die Gütefunktion anzeigt, wie gut das (skalierte und verschobene) Kamera-Objekt 250 zu den Sensordaten des abstandssensierenden Umfeldsensors 111 passt.
- Das Kamera-Objekt 250 kann dann mit den auf Basis der Sensordaten des abstandssensierenden Umfeldsensors 111 erkannten belegten Zellen 201 assoziiert werden, für die sich ein relativ guter Fit (d.h. ein relativ guter Wert der Gütefunktion) ergibt.

Sobald ein oder mehrere Kamera-Objekte 250 mit Punkten bzw. Zellen 201 eines auf Basis der Sensordaten des abstandssensierenden Umfeldsensors 111 ermittelten Belegungsrasters 200 assoziiert wurden, kann ein fusioniertes Belegungsraster 200 abgeleitet werden, das sowohl die Informationen des abstandssensierenden Umfeldsensors 111 als auch die Information der Kamera 112 enthält.

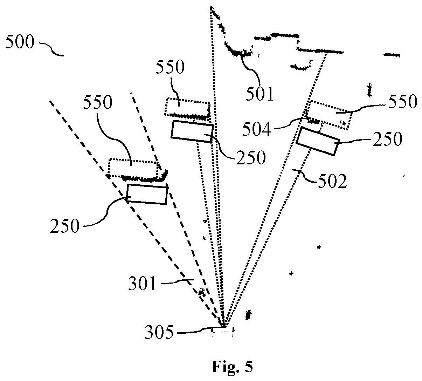

Wie in Fig. 5 dargestellt, können die Sensordaten 500 eines abstandssensierenden Umfeldsensors 111 eine Vielzahl von detektierten Punkten 501, 504 anzeigen. Ein Punkt 501, 504 kann dabei eine Stelle im Erfassungsbereich des Umfeldsensors 111 sein, an dem eine Reflektion eines von dem Umfeldsensor 111 ausgesendeten Sensorsignals (z.B. eines Laser- oder eines Radarsignals) stattgefunden hat. An einem von dem Umfeldsensor 111 detektierten Punkt 501, 504 kann somit ein Objekt angeordnet sein. Des Weiteren zeigen die Sensordaten eines abstandssensierenden Umfeldsensors 111 Bereiche 502 an, die mit hoher Wahrscheinlichkeit frei sind (da in diesen Bereichen 502 zwischen dem Sensorursprung und der ersten Hindernisdetektion kein Objekt angeordnet ist).

Außerdem zeigt Fig. 5 beispielhafte Kamera-Objekte 250, die durch Veränderung des Abstands innerhalb eines jeweiligen Winkelbereichs 301 relativ zu dem Referenzpunkt 305 und durch entsprechende Skalierung mit detektierten Punkten 501, 504 der Sensordaten 500 assoziiert werden können. Es können dann auf Basis der Assoziation der detektierten Punkte 501, 504 der Sensordaten 500 des abstandssensierenden Umfeldsensors 111 mit den ein oder mehreren Kamera-Objekten 250 Umgebungs-Objekte 550 detektiert werden. Dabei kann auf Basis der Sensordaten 500 des abstandssensierenden Umfeldsensors 111 in präziser Weise die räumliche Lage der ein oder mehreren Umgebungs-Objekte 550 ermittelt werden. Des Weiteren kann auf Basis der Bilddaten eine präzise Klassifikation der Umgebungs-Objekte 550 (z.B. in unterschiedliche Objekt-Typen, etwa Fahrzeug, Fußgänger, Fahrradfahrer, etc.) erfolgen. Außerdem können auf Basis der Bilddaten in präziser Weise weitere Attribute eines Umgebungs-Objektes 550 (wie z.B. die Farbe, die Form, etc.) ermittelt werden. Außerdem kann auf Basis der Bilddaten eine zuverlässiges Clustering von detektierten Punkten 501, 504 der Sensordaten 500 des abstandssensierenden Umfeldsensors 111 zu ein oder mehreren unterschiedlichen Umgebungs-Objekten 550 erfolgen.

Auf Basis der in Fig. 5 dargestellten fusionierten Sensordaten kann in präziser Weise ein fusioniertes Belegungsraster 200 ermittelt werden, das zusätzlich zu der Belegungswahrscheinlichkeit der einzelnen Zellen 201 auch eine Objektzugehörigkeit von Zellen 201 zu ein oder mehreren unterschiedlichen Umgebungs-Objekten 550 anzeigt.

Ein anhand eines abstandssensierenden Umfeldsensors 111 detektierter Punkt 501, 504 kann durch eine Reflektion an einem Objekt 550 oder durch eine Reflektion am Boden hervorgerufen werden. Bei einem detektierten Punkt 501, 504 kann es sich somit um einen möglichen Boden-Punkt handeln, der keinem Objekt 550 zugeordnet werden sollte. Die Unterscheidung zwischen einem Objekt-Punkt 501 und einem möglichen Boden-Punkt 504 kann z.B. auf Basis der Höhe ermittelt werden, in der eine Reflektion erfolgt. Wenn eine Reflektion nur in relativ niedriger Höhe vom Boden erfolgt, so kann ggf. darauf geschlossen werden, dass es sich bei dem detektierten Punkt 501, 504 um einen möglichen Boden-Punkt 504 handelt.

Grundsätzlich können die detektierten Punkte 501, 504 eines abstandssensierenden Umfeldsensors 111 in unterschiedliche Klassen klassifiziert werden, z.B. Regen, Rauschen, Boden, Unterfahrbar (wie z.B. ein Tunnel oder eine Brücke), etc. Diese Klassen können wiederum in relativ grob in die Klassen "Hindernis" und "kein Hindernis" zusammengefasst werden. Die in diesem Dokument beschriebene Re-Validierung eines der Punkte aus der Klasse "kein Hindernis" kann für alle Punkte der Klasse "kein Hindernis" erfolgen (nicht nur für die Boden-Punkte 504). Ein Boden-Punkt kann daher allgemein als Nicht-Hindernis-Punkt betrachtet werden.

Eine höhenbasierte Klassifikation in Objekt-Punkte 501 und in Boden-Punkte 504 ist typischerweise mit Fehlern behaftet. Die in diesem Dokument beschriebene Assoziation eines Kamera-Objektes 250 mit detektierten Punkten 501, 504 aus Sensordaten 500 eines abstandssensierenden Umfeldsensors 111 ermöglicht es, zunächst alle detektierten Punkte 501, 504, insbesondere auch als mögliche Boden-Punkte 504 identifizierte Punkte, bei der Datenfusion zu berücksichtigen. Wenn ein möglicher Boden-Punkt 504 mit einem Kamera-Objekt 250 assoziiert wird, so kann daraus geschlossen werden, dass es sich bei dem Punkt nicht um einen Boden-Punkt, sondern um einen Objekt-Punkt handelt. Andererseits kann ein möglicher Boden-Punkt 504 mit erhöhter Wahrscheinlichkeit dem Boden zugeordnet werden, wenn der mögliche Boden-Punkt mit keinem Kamera-Objekt 250 assoziiert wird. Somit kann die Güte der Erkennung von Umgebungs-Objekten 550 weiter erhöht werden.

Fig. 4 zeigt ein Ablaufdiagramm eines beispielhaften Verfahrens 400 zur Ermittlung von Information in Bezug auf ein Umgebungs-Objekt in einem Umfeld eines Fahrzeugs 100. Insbesondere kann das Verfahren 400 dazu beitragen, um Sensordaten von unterschiedlichen Sensoren 111, 112 zu fusionieren, um die Detektionsgüte von Objekten zu erhöhen und/oder um erweiterte Information in Bezug auf detektierte Objekte zu ermitteln. Des Weiteren kann das Verfahren 400 dazu genutzt werden, ein Fahrzeug 100 auf Basis der ermittelten Information in Bezug auf ein Objekt zumindest teilweise automatisiert zu führen. Das Verfahren 400 kann durch eine Verarbeitungseinheit 101 eines Fahrzeugs 100 ausgeführt werden.

Das Verfahren 400 umfasst das Ermitteln 401 von Bilddaten einer Kamera 112 (insbesondere einer Mono-Kamera) des Fahrzeugs 100. Dabei können die Bilddaten ein Umfeld des Fahrzeugs 100 ausgehend von einem Referenzpunkt 305 anzeigen. Der Referenzpunkt 305 kann z.B. der Sensorfläche der Kamera 112 entsprechen.

Außerdem umfasst das Verfahren 400 das Detektieren 402 zumindest eines Kamera-Objektes 250 in dem Umfeld des Fahrzeugs 100 auf Basis der Bilddaten. Zu diesem Zweck können ein oder mehrere Bildanalyse-Algorithmen verwendet werden, die z.B. eingerichtet sind, auf Basis der Bilddaten (z.B. auf Basis der Bildpixel eines Bildframes) die Konturen zumindest eines Objektes zu erkennen, wobei ein auf Basis der Bilddaten detektiertes Objekt in diesem Dokument als Kamera-Objekt 250 bezeichnet wird.

Die Bilddaten ermöglichen es, die Konturen und/oder die Form von Umgebungs-Objekten 550 in präziser Weise zu ermitteln. Das Weiteren kann typischerweise anhand von Klassifizierungsalgorithmen der Objekt-Typ eines Umgebungs-Objektes 550 in präziser Weise auf Basis von Bilddaten ermittelt werden. Andererseits kann die Entfernung eines Umgebungs-Objektes 550 zu dem Referenzpunkt 305 meist nur mit relativ geringer Genauigkeit auf Basis von Bilddaten ermittelt werden.

Das Verfahren 400 umfasst ferner, das Ermitteln 403 von Sensordaten 500 eines abstandssensierenden Umfeldsensors 111 des Fahrzeugs 100. Dabei kann das Ermitteln 403 von Sensordaten 500 eines abstandssensierenden Umfeldsensors 111 parallel zu dem Ermitteln 401 von Bilddaten und dem Detektieren 402 zumindest eines Kamera-Objektes 250 erfolgen. Insbesondere können sich die Sensordaten 500 und die Bilddaten auf einen gleichen (Abtast-) Zeitpunkt beziehen.

Ein abstandssensierender Umfeldsensor 111 kann ein Sensor sein, mit dem der Abstand von Messpunkten in präziser Weise ermittelt werden. Beispielhafte abstandssensierende Umfeldsensoren 111 sind ein Radarsensor oder ein Lidarsensor. Die Sensordaten 500 des abstandssensierenden Umfeldsensors 111 können eine Vielzahl von detektierten Punkten 501, 504 in dem Umfeld des Fahrzeugs 100 anzeigen. Dabei können die detektierten Punkte 501, 504 Reflektionspunkte sein, an denen ein von dem Umfeldsensor 111 ausgesendetes Sensorsignal reflektiert wurden.

Des Weiteren umfasst das Verfahren 400 das Verschieben 404 des Kamera-Objektes 250 an eine Vielzahl von unterschiedlichen Abständen relativ zu dem Referenzpunkt 305. Dabei kann das Kamera-Objekt 250 entlang eines von dem Referenzpunkt 305 ausgehenden Strahls verschoben werden, um das Kamera-Objekt 250 an unterschiedlichen (radialen) Abständen zu dem Referenzpunkt 305 zu positionieren. Im Rahmen des Verschiebens 404 des Kamera-Objektes 250 kann auch eine Skalierung des Kamera-Objektes 250 erfolgen. Dabei kann das Kamera-Objekt 250 verkleinert werden, wenn das Kamera-Objekt 250 näher an den Referenzpunkt 305 heran verschoben wird, und/oder vergrößert werden, wenn das Kamera-Objekt 250 weiter von dem Referenzpunkt 305 weg verschoben wird.

Außerdem umfasst das Verfahren 400 das Ermitteln 405 einer Vielzahl von Werten eines Überlappungsmaßes für die Überlappung des jeweiligen (verschobenen und/oder skalierten) Kamera-Objektes 250 mit detektierten Punkten 501, 504 der Sensordaten 500 für die Vielzahl von unterschiedlichen Abständen.

Ferner umfasst das Verfahren 400 das Ermitteln 406 eines Objekt-Abstands des Kamera-Objektes 250 von dem Referenzpunkt 305 in Abhängigkeit von der Vielzahl von Werten des Überlappungsmaßes. Dabei kann der Objekt-Abstand als der Abstand aus der Vielzahl von unterschiedlichen Abständen gewählt werden, bei dem das Überlappungsmaß eine vergleichsweise optimale Überlappung des Kamera-Objektes 250 mit detektierten Punkten 501, 504 der Sensordaten 500 anzeigt. Insbesondere kann der Objekt-Abstand als der Abstand aus der Vielzahl von unterschiedlichen Abständen gewählt werden, für den der Wert des Überlappungsmaßes maximal bzw. minimal ist.

Des Weiteren kann das Kamera-Objekt 250 (basierend auf dem ermittelten Objekt-Abstand) einer Teilmenge der Vielzahl von detektierten Punkten 501, 504 zugeordnet werden. Diese Zuordnung kann dann bei der Ermittlung eines Belegungsrasters 200 berücksichtigt werden. Das Belegungsraster 200 kann dabei für eine Vielzahl von Zellen 201 jeweils eine Belegungswahrscheinlichkeit der jeweiligen Zelle 201 durch ein Umgebungs-Objekt 550 anzeigen. Das Belegungsraster 200 kann dazu verwendet werden, in zuverlässiger Weise ein oder mehrere Umgebungs-Objekte 550 zu detektieren und/oder nachzuverfolgen. Das Fahrzeug 100 kann dann in Abhängigkeit von den ein oder mehreren Umgebungs-Objekten 550 zumindest teilweise automatisiert geführt werden. Somit können die Zuverlässigkeit und die Sicherheit eines zumindest teilweise automatisiert fahrenden Fahrzeugs 100 erhöht werden.

Das Verfahren 400 kann regelmäßig, insbesondere periodisch, wiederholt werden (z.B. mit einer Frequenz von 10Hz, 20Hz, 25Hz oder mehr). Dabei können an den jeweiligen Zeitpunkten jeweils aktuelle Bilddaten und/oder Sensordaten 500 ermittelt und berücksichtigt werden. Durch die Wiederholung des Verfahrens 400 können in zuverlässiger Weise während der Fahrt eines Fahrzeugs 100 Umgebungs-Objekte 500 detektiert und nachverfolgt werden.

**Patentansprüche**

1. Verarbeitungseinheit (101) für ein Fahrzeug (100); wobei die Verarbeitungseinheit (101) eingerichtet ist,

   - Bilddaten zu ermitteln, die von einer Kamera (112) des Fahrzeugs (100) erfasst wurden; wobei die Bilddaten ein Umfeld des Fahrzeugs (100) ausgehend von einem Referenzpunkt (305) anzeigen;
   - auf Basis der Bilddaten zumindest ein als Kamera-Objekt (250) bezeichnetes Objekt (150) in dem Umfeld des Fahrzeugs (100) zu detektieren;
   - Sensordaten (500) eines abstandssensierenden Umfeldsensors (111) des Fahrzeugs (100) zu ermitteln; wobei die Sensordaten (500) eine Vielzahl von detektierten Punkten (501, 504) in dem Umfeld des Fahrzeugs (100) anzeigen; **dadurch gekennzeichnet, dass** die Verarbeitungseinheit (101) weiter eingerichtet ist,
   - das Kamera-Objekt (250) an einer Vielzahl von unterschiedlichen Abständen zu dem Referenzpunkt (305) zu platzieren, um unterschiedliche Hypothesen in Bezug auf den Abstand des Kamera-Objektes (250) zu dem Referenzpunkt (305) zu betrachten;
   - für die Vielzahl von unterschiedlichen Abständen eine entsprechende Vielzahl von Werten eines Überlappungsmaßes des in dem jeweiligen Abstand platzierten Kamera-Objektes (250) mit detektierten Punkten (501, 504) der Sensordaten (500) zu ermitteln; wobei der Wert des Überlappungsmaßes anzeigt, wie stark das in dem jeweiligen Abstand platzierte Kamera-Objekte (250) mit detektierten Punkten (501, 504) der Sensordaten (500) überlappt; und
   - in Abhängigkeit von der Vielzahl von Werten des Überlappungsmaßes einen Objekt-Abstand des Kamera-Objektes (250) von dem Referenzpunkt (305) zu ermitteln.

2. Verarbeitungseinheit (101) gemäß Anspruch 1, wobei die Verarbeitungseinheit (101) eingerichtet ist,

   - einen Winkelbereich (301), insbesondere einen Azimut-Winkelbereich und/oder einen Höhen-Winkelbereich, um den Referenzpunkt (305) für das Kamera-Objekt (250) zu ermitteln;
   - das Kamera-Objekt (250) innerhalb eines vom dem Winkelbereich (301) definierten Teilbereichs des Umfelds des Fahrzeugs (100) entlang eines von dem Referenzpunkt (305) ausgehenden Strahls zu verschieben; und
   - einen Wert des Überlappungsmaßes des jeweiligen Kamera-Objektes (250), insbesondere ausschließlich, mit detektierten Punkten (501, 504) der Sensordaten (500) aus dem Teilbereich des Umfelds des Fahrzeugs (100) zu ermitteln.

3. Verarbeitungseinheit (101) gemäß Anspruch 2, wobei der Winkelbereich (301) derart ermittelt wird, dass den Winkelbereich (301) begrenzende, von dem Referenzpunkt (305) ausgehende Strahlen das Kamera-Objekt (250) an zwei unterschiedlichen Seiten des Kamera-Objektes (250) eingrenzen, optional mit einem zusätzlichen Toleranzpuffer (303) an den zwei unterschiedlichen Seiten des Kamera-Objektes (250).

4. Verarbeitungseinheit (101) gemäß einem der Ansprüche 2 bis 3, wobei Verarbeitungseinheit (101) eingerichtet ist,

   - einen Azimut-Winkelbereich (301) und einen Höhen-Winkelbereich, um den Referenzpunkt (305) für das Kamera-Objekt (250) zu ermitteln;
   - das Kamera-Objekt (250) innerhalb eines vom dem Azimut-Winkelbereich (301) und dem Höhen-Winkelbereich definierten Teilbereichs des Umfelds des Fahrzeugs (100) entlang eines von dem Referenzpunkt (305) ausgehenden Strahls zu verschieben; und
- einen Wert des Überlappungsmaßes des jeweiligen Kamera-Objektes (250), insbesondere ausschließlich, mit detektierten Punkten (501, 504) der Sensordaten (500) aus dem Teilbereich des Umfelds des Fahrzeugs (100) zu ermitteln.

5. Verarbeitungseinheit (101) gemäß einem der vorhergehenden Ansprüche, wobei die Verarbeitungseinheit (101) eingerichtet ist, das Kamera-Objekt (250) in Abhängigkeit von dem Abstand zu dem Referenzpunkt (305) zu skalieren.

6. Verarbeitungseinheit (101) gemäß einem der vorhergehenden Ansprüche, wobei die Verarbeitungseinheit (101) eingerichtet ist,

   - auf Basis der Bilddaten einen geschätzten Abstand des Kamera-Objekts (250) zu dem Referenzpunkt (305) zu ermitteln; und
   - das Kamera-Objekt (250) in einem Abstandsbereich um den geschätzten Abstand herum, insbesondere entlang eines von dem Referenzpunkt (305) ausgehenden Strahls, zu verschieben, um das Kamera-Objekt (250) an die Vielzahl von unterschiedlichen Abständen zu verschieben.

7. Verarbeitungseinheit (101) gemäß einem der vorhergehenden Ansprüche, wobei

   - die Kamera (112) und der Umfeldsensor (111) an unterschiedlichen Stellen an dem Fahrzeug (100) angeordnet sind; und
   - die Verarbeitungseinheit (101) eingerichtet ist, das Kamera-Objekt (250) und die Sensordaten (500) des Umfeldsensors (111) in einem gemeinsamen Koordinatensystem darzustellen, insbesondere

      - durch eine Projektion des Kamera-Objektes (250) in ein Koordinatensystem des Umfeldsensors (111); oder
      - durch eine Projektion der Sensordaten (500) in ein Koordinatensystem der Kamera (112).

8. Verarbeitungseinheit (101) gemäß einem der vorhergehenden Ansprüche, wobei

   - das Kamera-Objekt (250) eine Vielzahl von Kamera-Punkten in dem Umfeld des Fahrzeugs (100) anzeigt, an denen das Kamera-Objekt (250) angeordnet ist; und
   - das Verschieben des Kamera-Objektes (250) das Verschieben zumindest einiger der Vielzahl von Kamera-Punkten umfasst, insbesondere das Verschieben entlang eines von dem Referenzpunkt (305) ausgehenden Strahls.

9. Verarbeitungseinheit (101) gemäß Anspruch 8, wobei das Ermitteln eines Wertes des Überlappungsmaßes umfasst,

   - Ermitteln eines Anteils der Vielzahl von Kamera-Punkten des Kamera-Objektes (250), die mit detektieren Punkten (501, 504) der Sensordaten (500) zusammenfallen; und/oder
   - Ermitteln eines Abstands der Vielzahl von Kamera-Punkten des Kamera-Objektes (250) zu detektieren Punkten (501, 504) der Sensordaten (500); und/oder
   - Ermitteln eines Grades der Überlappung der Vielzahl von Kamera-Punkten des Kamera-Objektes (250) mit detektieren Punkten (501, 504) der Sensordaten (500).

10. Verarbeitungseinheit (101) gemäß einem der vorhergehenden Ansprüche, wobei

   - die Vielzahl von detektierten Punkten (501, 504) zumindest einen möglichen Nicht-Hindernis-Punkt (504) umfassen, der möglicherweise kein im Umfeld des Fahrzeugs (100) angeordnetes Umgebungs-Objekt (550) anzeigt; und
   - die Werte des Überlappungsmaßes unter Berücksichtigung des möglichen Nicht-Hindernis-Punktes (504) ermittelt werden.

11. Verarbeitungseinheit (101) gemäß einem der vorhergehenden Ansprüche, wobei die Verarbeitungseinheit (101) eingerichtet ist,

   - in Abhängigkeit von dem ermittelten Objekt-Abstand das Kamera-Objekt (250) einer Teilmenge der Vielzahl von detektierten Punkten (501, 504) zuzuordnen; und
- auf Basis der Sensordaten (500) unter Berücksichtigung des zugeordneten Kamera-Objektes (250) ein Belegungsraster (200) des Umfelds des Fahrzeugs (100) zu ermitteln; wobei das Belegungsraster (200) für eine Vielzahl von Zellen (201) des Umfelds des Fahrzeugs (100) jeweils eine Wahrscheinlichkeit dafür anzeigt, ob die jeweilige Zelle (201) frei ist oder ob die jeweilige Zelle (201) durch ein Objekt (550) belegt ist.

12. Verarbeitungseinheit (101) gemäß Anspruch 11 mit Rückbezug auf Anspruch 10, wobei

- der mögliche Nicht-Hindernis-Punkt (504) bei der Ermittlung des Belegungsrasters (200) unberücksichtigt bleibt, wenn dem Nicht-Hindernis-Punkt (504) kein Kamera-Objekt (250) zugeordnet wurde; und/oder
- der mögliche Nicht-Hindernis-Punkt (504), insbesondere nur dann, bei der Ermittlung des Belegungsrasters (200) berücksichtigt wird, wenn dem Nicht-Hindernis-Punkt (504) ein Kamera-Objekt (250) zugeordnet wurde.

13. Verarbeitungseinheit (101) gemäß einem der vorhergehenden Ansprüche, wobei die Verarbeitungseinheit (101) eingerichtet ist,

- auf Basis der Vielzahl von Werten des Überlappungsmaßes zu bestimmen, ob das Kamera-Objekt (250) einer Teilmenge der Vielzahl von detektierten Punkten (501, 504) zugeordnet werden kann oder nicht; und
- das Kamera-Objekt (250) bei der Ermittlung eines Belegungsrasters (200) des Umfelds des Fahrzeugs (100) auf Basis der Sensordaten (500) unberücksichtigt zu lassen, wenn bestimmt wurde, dass das Kamera-Objekt (250) keiner Teilmenge der Vielzahl von detektierten Punkten (501, 504) zugeordnet werden kann; und/oder
- das Kamera-Objekt (250) bei der Ermittlung des Belegungsrasters (200) des Umfelds des Fahrzeugs (100) auf Basis der Sensordaten (500) gemäß dem ermittelten Objekt-Abstand zu berücksichtigen, insbesondere nur dann, wenn bestimmt wurde, dass das Kamera-Objekt (250) einer Teilmenge der Vielzahl von detektierten Punkten (501, 504) zugeordnet werden kann.

14. Verarbeitungseinheit (101) gemäß einem der vorhergehenden Ansprüche, wobei die Verarbeitungseinheit (101) eingerichtet ist,

- auf Basis der Sensordaten (500) ein Belegungsraster (200) des Umfelds des Fahrzeugs (100) zu ermitteln;
- auf Basis des Belegungsrasters (200) unter Berücksichtigung des Kamera-Objektes (250) in dem ermittelten Objekt-Abstand zu dem Referenzpunkt (305) ein, dem Kamera-Objekt (250) entsprechendes, Umgebungs-Objekt (550) in dem Umfeld des Fahrzeugs (100) zu detektieren; und
- auf Basis der Bilddaten ein oder mehrere Attribute, insbesondere einen Objekt-Typ aus einer Mehrzahl von unterschiedlichen Objekt-Typen, des Umgebungs-Objektes (550) zu ermitteln.

15. Verfahren (400) zur Ermittlung von Information in Bezug auf ein Objekt in einem Umfeld eines Fahrzeugs (100); wobei das Verfahren (400) umfasst,

- Ermitteln (401) von Bilddaten, die von einer Kamera (112) des Fahrzeugs (100) erfasst wurden; wobei die Bilddaten ein Umfeld des Fahrzeugs (100) ausgehend von einem Referenzpunkt (305) anzeigen;
- Detektieren (402) zumindest eines als Kamera-Objekt (250) bezeichneten Objektes (150) in dem Umfeld des Fahrzeugs (100) auf Basis der Bilddaten;
- Ermitteln (403) von Sensordaten (500) eines abstandssensierenden Umfeldsensors (111) des Fahrzeugs (100); wobei die Sensordaten (500) eine Vielzahl von detektierten Punkten (501, 504) in dem Umfeld des Fahrzeugs (100) anzeigen; **dadurch gekennzeichnet, dass** das Verfahren weiter umfasst
- Platzieren (404) des Kamera-Objektes (250) an einer Vielzahl von unterschiedlichen Abständen relativ zu dem Referenzpunkt (305), um unterschiedliche Hypothesen in Bezug auf den Abstand des Kamera-Objektes (250) zu dem Referenzpunkt (305) zu betrachten;
- Ermitteln (405) einer Vielzahl von Werten eines Überlappungsmaßes des in einem jeweiligen Abstand platzierten Kamera-Objektes (250) mit detektierten Punkten (501, 504) der Sensordaten (500) für die Vielzahl von unterschiedlichen Abständen; wobei der Wert des Überlappungsmaßes anzeigt, wie stark das in dem jeweiligen Abstand platzierte Kamera-Objekte (250) mit detektierten Punkten (501, 504) der Sensordaten (500) überlappt; und
- Ermitteln (406) eines Objekt-Abstands des Kamera-Objektes (250) von dem Referenzpunkt (305) in Abhängigkeit von der Vielzahl von Werten des Überlappungsmaßes.

## EP 3 877 776 B1

**Claims**

1. Processing unit (101) for a vehicle (100), wherein the processing unit (101) is set up

   - to ascertain image data captured by a camera (112) of the vehicle (100), wherein the image data indicate surroundings of the vehicle (100) proceeding from a reference point (305);
   - to detect at least one object (150), referred to as camera object (250), in the surroundings of the vehicle (100) on the basis of the image data;
   - to ascertain sensor data (500) from a distance-sensing surround sensor (111) of the vehicle (100), wherein the sensor data (500) indicate a multiplicity of detected points (501, 504) in the surroundings of the vehicle (100); **characterized in that** the processing unit (101) is further set up
   - to place the camera object (250) at a multiplicity of different distances from the reference point (305) in order to consider different hypotheses in relation to the distance from the camera object (250) to the reference point (305);
   - to ascertain for the multiplicity of different distances a corresponding multiplicity of values of an amount of overlap of the camera object (250) placed at the respective distance with detected points (501, 504) of the sensor data (500), wherein the value of the amount of overlap indicates how strongly the camera object (250) placed at the respective distance overlaps with detected points (501, 504) of the sensor data (500); and
   - to ascertain an object distance of the camera object (250) from the reference point (305) on the basis of the multiplicity of values of the amount of overlap.

2. Processing unit (101) according to Claim 1, wherein the processing unit (101) is set up

   - to ascertain an angle range (301), in particular an azimuth angle range and/or height angle range, around the reference point (305) for the camera object (250);
   - to displace the camera object (250) within a portion of the surroundings of the vehicle (100) defined by the angle range (301), along a ray emanating from the reference point (305); and
   - to ascertain a value of the amount of overlap of the respective camera object (250), in particular exclusively, with detected points (501, 504) of the sensor data (500) from the portion of the surroundings of the vehicle (100).

3. Processing unit (101) according to Claim 2, wherein the angle range (301) is ascertained in such a way that rays delimiting the angle range (301) and emanating from the reference point (305) enclose the camera object (250) on two different sides of the camera object (250), optionally with an additional tolerance buffer (303) on the two different sides of the camera object (250).

4. Processing unit (101) according to either of Claims 2 and 3, wherein the processing unit (101) is set up

   - to ascertain an azimuth angle range (301) and a height angle range around the reference point (305) for the camera object (250);
   - to displace the camera object (250) within a portion of the surroundings of the vehicle (100), which is defined by the azimuth angle range (301) and the height angle range, along a ray emanating from the reference point (305); and
   - to ascertain a value of the amount of overlap of the respective camera object (250), in particular exclusively, with detected points (501, 504) of the sensor data (500) from the portion of the surroundings of the vehicle (100).

5. Processing unit (101) according to any one of the preceding claims, wherein the processing unit (101) is set up to scale the camera object (250) on the basis of the distance from the reference point (305).

6. Processing unit (101) according to any one of the preceding claims, wherein the processing unit (101) is set up

   - to ascertain an estimated distance of the camera object (250) from the reference point (305) on the basis of the image data; and
   - to displace the camera object (250) within a distance range around the estimated distance, in particular along a ray emanating from the reference point (305), in order to displace the camera object (250) to the multiplicity of different distances.

7. Processing unit (101) according to any one of the preceding claims, wherein

   - the camera (112) and the surround sensor (111) are arranged at different locations on the vehicle (100); and

13

- the processing unit (101) is set up to represent the camera object (250) and the sensor data (500) of the surround sensor (111) in a common coordinate system, in particular
- by a projection of the camera object (250) into a coordinate system of the surround sensor (111); or
- by a projection of the sensor data (500) into a coordinate system of the camera (112).

8. Processing unit (101) according to any one of the preceding claims, wherein

- the camera object (250) indicates a multiplicity of camera points in the surroundings of the vehicle (100) at which the camera object (250) is arranged; and
- the displacement of the camera object (250) comprises the displacement of at least some of the multiplicity of camera points, in particular the displacement along a ray emanating from the reference point (305).

9. Processing unit (101) according to Claim 8, wherein the ascertainment of a value of the amount of overlap comprises

- ascertaining a proportion of the multiplicity of camera points of the camera object (250) which coincide with detected points (501, 504) of the sensor data (500); and/or
- ascertaining a distance of the multiplicity of camera points of the camera object (250) from detected points (501, 504) of the sensor data (500); and/or
- ascertaining a degree of overlap of the multiplicity of camera points of the camera object (250) with detected points (501, 504) of the sensor data (500).

10. Processing unit (101) according to any one of the preceding claims, wherein

- the multiplicity of detected points (501, 504) comprises at least one possible non-obstacle point (504) which possibly does not indicate a surroundings object (550) arranged in the surroundings of the vehicle (100); and
- the values of the amount of overlap are ascertained by taking account of the possible non-obstacle point (504) .

11. Processing unit (101) according to any one of the preceding claims, wherein the processing unit (101) is set up

- to assign the camera object (250) to a subset of the multiplicity of detected points (501, 504) on the basis of the ascertained object distance; and
- to ascertain an occupancy grid (200) of the surroundings of the vehicle (100) on the basis of the sensor data (500) and taking account of the assigned camera object (250), the occupancy grid (200) in each case indicating for a multiplicity of cells (201) of the surroundings of the vehicle (100) the probability of whether the respective cell (201) is free or whether the respective cell (201) is occupied by an object (550).

12. Processing unit (101) according to Claim 11 and referring back to Claim 10, wherein

- the possible non-obstacle point (504) remains unconsidered when ascertaining the occupancy grid (200) if no camera object (250) was assigned to the non-obstacle point (504); and/or
- the possible non-obstacle point (504) is considered when ascertaining the occupancy grid (200) if a camera object (250) was assigned to the non-obstacle point (504), in particular the non-obstacle point is only considered in this case.

13. Processing unit (101) according to any one of the preceding claims, wherein the processing unit (101) is set up

- to determine on the basis of the multiplicity of values of the amount of overlap whether or not the camera object (250) can be assigned to a subset of the multiplicity of detected points (501, 504); and
- to leave the camera object (250) unconsidered when ascertaining an occupancy grid (200) of the surroundings of the vehicle (100) on the basis of the sensor data (500) if it was determined that the camera object (250) cannot be assigned to any subset of the multiplicity of detected points (501, 504); and/or
- to consider the camera object (250) in accordance with the ascertained object distance when ascertaining the occupancy grid (200) of the surroundings of the vehicle (100) on the basis of the sensor data (500), in particular only if it was determined that the camera object (250) can be assigned to a subset of the multiplicity of detected points (501, 504).

14. Processing unit (101) according to any one of the preceding claims, wherein the processing unit (101) is set up

- to ascertain an occupancy grid (200) of the surroundings of the vehicle (100) on the basis of the sensor data (500);
- to detect a surroundings object (550), which corresponds to the camera object (250), in the surroundings of the vehicle (100) on the basis of the occupancy grid (200), taking account of the camera object (250) at the ascertained object distance from the reference point (305); and
- to ascertain one or more attributes of the surroundings object (550) on the basis of the image data, in particular an object type from a plurality of different object types.

15. Method (400) for ascertaining information in relation to an object in surroundings of a vehicle (100), wherein the method (400) comprises

- ascertaining (401) image data captured by a camera (112) of the vehicle (100), wherein the image data indicate surroundings of the vehicle (100) proceeding from a reference point (305);
- detecting (402) at least one object (150), referred to as camera object (250), in the surroundings of the vehicle (100) on the basis of the image data;
- ascertaining (403) sensor data (500) from a distance-sensing surround sensor (111) of the vehicle (100), wherein the sensor data (500) indicate a multiplicity of detected points (501, 504) in the surroundings of the vehicle (100); **characterized in that** the method further comprises
- placing (404) the camera object (250) at a multiplicity of different distances relative to the reference point (305) in order to consider different hypotheses in relation to the distance of the camera object (250) from the reference point (305);
- ascertaining (405) for the multiplicity of different distances a multiplicity of values of an amount of overlap of the camera object (250) placed at a respective distance with detected points (501, 504) of the sensor data (500), wherein the value of the amount of overlap indicates how strongly the camera object (250) placed at the respective distance overlaps with detected points (501, 504) of the sensor data (500); and
- ascertaining (406) an object distance of the camera object (250) from the reference point (305) on the basis of the multiplicity of values of the amount of overlap.

**Revendications**

1. Unité de traitement (101) pour un véhicule (100) ; l'unité de traitement (101) étant conçue pour

- déterminer des données d'image qui ont été acquises par une caméra (112) du véhicule (100) ; les données d'image indiquant un environnement du véhicule (100) à partir d'un point de référence (305) ;
- détecter, sur la base des données d'image, au moins un objet (150) désigné en tant qu'objet de caméra (250) dans l'environnement du véhicule (100) ;
- déterminer des données de capteur (500) d'un capteur d'environnement à détection de distance (111) du véhicule (100) ; les données de capteur (500) indiquant une pluralité de points détectés (501, 504) dans l'environnement du véhicule (100) ; **caractérisé en ce que** l'unité de traitement (101) est en outre conçue pour
- placer l'objet de caméra (250) à une pluralité de distances différentes par rapport au point de référence (305) afin d'examiner différentes hypothèses concernant la distance de l'objet de caméra (250) par rapport au point de référence (305) ;
- déterminer, pour la pluralité de distances différentes, une pluralité correspondante de valeurs d'une mesure de chevauchement entre l'objet de caméra (250) placé à chaque distance respective et des points détectés (501, 504) des données de capteur (500) ; la valeur de la mesure de chevauchement indiquant dans quelle mesure l'objet de caméra (250) placé à la distance respective chevauche des points détectés (501, 504) des données de capteur (500) ; et
- déterminer, en fonction de la pluralité des valeurs de la mesure de chevauchement, une distance d'objet de l'objet de caméra (250) par rapport au point de référence (305) .

2. Unité de traitement (101) selon la revendication 1, l'unité de traitement (101) étant conçue pour

- déterminer une plage d'angles (301), en particulier une plage d'angles d'azimut et/ou une plage d'angles d'élévation, autour du point de référence (305) pour l'objet de caméra (250) ;
- déplacer l'objet de caméra (250) à l'intérieur d'une zone partielle de l'environnement du véhicule (100), définie par la plage d'angles (301), le long d'un rayon partant du point de référence (305) ; et
- déterminer une valeur de la mesure de chevauchement de l'objet de caméra (250) respectif, en particulier uniquement avec des points détectés (501, 504) des données de capteur (500) provenant de la zone partielle de l'environnement du véhicule (100).

3. Unité de traitement (101) selon la revendication 2, la plage d'angles (301) étant déterminée de manière à ce que des rayons partant du point de référence (305) et délimitant la plage d'angles (301) encadrent l'objet de caméra (250) sur deux côtés différents de l'objet de caméra (250), facultativement avec une zone tampon de tolérance supplémentaire (303) sur les deux côtés différents de l'objet de caméra (250).

4. Unité de traitement (101) selon l'une quelconque des revendications précédentes, l'unité de traitement (101) étant conçue pour

   - déterminer une plage d'angles d'azimut (301) et une plage d'angles d'élévation autour du point de référence (305) pour l'objet de caméra (250) ;
   - déplacer l'objet de caméra (250) à l'intérieur d'une zone partielle de l'environnement du véhicule (100), définie par la plage d'angles d'azimut (301) et la plage d'angles d'élévation, le long d'un rayon partant du point de référence (305) ; et
   - déterminer une valeur de la mesure de chevauchement de l'objet de caméra (250) respectif, en particulier uniquement avec des points détectés (501, 504) des données de capteur (500) provenant de la zone partielle de l'environnement du véhicule (100).

5. Unité de traitement (101) selon l'une quelconque des revendications précédentes, l'unité de traitement (101) étant conçue pour mettre à l'échelle l'objet de caméra (250) en fonction de la distance par rapport au point de référence (305).

6. Unité de traitement (101) selon l'une quelconque des revendications précédentes, l'unité de traitement (101) étant conçue pour

   - déterminer, sur la base des données d'image, une distance estimée de l'objet de caméra (250) par rapport au point de référence (305) ; et
   - déplacer l'objet de caméra (250) dans une plage de distances autour de la distance estimée, en particulier le long d'un rayon partant du point de référence (305), afin de déplacer l'objet de caméra (250) à la pluralité de distances différentes.

7. Unité de traitement (101) selon l'une quelconque des revendications précédentes,

   - la caméra (112) et le capteur d'environnement (111) étant disposés à différents endroits sur le véhicule (100) ; et
   - l'unité de traitement (101) étant conçue pour représenter l'objet de caméra (250) et les données de capteur (500) du capteur d'environnement (111) dans un système de coordonnées commun, en particulier
   - par une projection de l'objet de caméra (250) dans un système de coordonnées du capteur d'environnement (111) ; ou
   - par une projection des données de capteur (500) dans un système de coordonnées de la caméra (112).

8. Unité de traitement (101) selon l'une quelconque des revendications précédentes,

   - l'objet caméra (250) indiquant une pluralité de points de caméra, dans l'environnement du véhicule (100), auxquels l'objet caméra (250) est disposé ; et
   - le déplacement de l'objet de caméra (250) comprenant le déplacement d'au moins certains de la pluralité de points de caméra, en particulier le déplacement le long d'un rayon partant du point de référence (305).

9. Unité de traitement (101) selon la revendication 8, la détermination d'une valeur de la mesure de chevauchement consistant à

   - déterminer une proportion de la pluralité de points de caméra de l'objet de caméra (250) qui coïncident avec des points détectés (501, 504) des données de capteur (500) ; et/ou
   - déterminer une proportion de la pluralité de points de caméra de l'objet de caméra (250) par rapport à des points détectés (501, 504) des données de capteur (500) ; et/ou
   - déterminer un degré de chevauchement de la pluralité de points de caméra de l'objet de caméra (250) avec des points détectés (501, 504) des données de capteur (500).

**10.** Unité de traitement (101) selon l'une quelconque des revendications précédentes,

- la pluralité de points détectés (501, 504) comprenant au moins un point de non-obstacle possible (504) qui peut ne pas indiquer d'objet d'environnement (550) disposé dans l'environnement du véhicule (100) ; et
- les valeurs de la mesure de chevauchement étant déterminées en tenant compte du point de non-obstacle possible (504).

**11.** Unité de traitement (101) selon l'une quelconque des revendications précédentes, l'unité de traitement (101) étant conçue pour

- associer, en fonction de la distance d'objet déterminée, l'objet de caméra (250) à un sous-ensemble de la pluralité de points détectés (501, 504) ; et
- déterminer, sur la base des données de capteur (500) et en tenant compte de l'objet de caméra (250) associé, une grille d'occupation (200) de l'environnement du véhicule (100) ; la grille d'occupation (200) indiquant respectivement, pour une pluralité de cellules (201) de l'environnement du véhicule (100), une probabilité pour que la cellule respective (201) soit libre ou que la cellule respective (201) soit occupée par un objet (550).

**12.** Unité de traitement (101) selon la revendication 11 en référence à la revendication 10,

- le point de non-obstacle possible (504) n'étant pas pris en compte, lors de la détermination de la grille d'occupation (200), si aucun objet de caméra (250) n'a été associé au point de non-obstacle (504) ; et/ou
- le point de non-obstacle possible (504) étant pris en compte, en particulier uniquement, lors de la détermination de la grille d'occupation (200), si un objet de caméra (250) a été associé au point de non-obstacle (504).

**13.** Unité de traitement (101) selon l'une quelconque des revendications précédentes, l'unité de traitement (101) étant conçue pour

- déterminer, sur la base de la pluralité de valeurs de la mesure de chevauchement, si l'objet de caméra (250) peut être associé ou non à un sous-ensemble de la pluralité de points détectés (501, 504) ; et
- ne pas tenir compte de l'objet de caméra (250) lors de la détermination d'une grille d'occupation (200) de l'environnement du véhicule (100) sur la base des données de capteur (500), s'il a été déterminé que l'objet de caméra (250) ne peut pas être associé à un sous-ensemble de la pluralité de points détectés (501, 504) ; et/ou
- tenir compte de l'objet de caméra (250) lors de la détermination de la grille d'occupation (200) de l'environnement du véhicule (100) sur la base des données de capteur (500) selon la distance d'objet déterminée, en particulier uniquement s'il a été déterminé que l'objet de caméra (250) peut être associé à un sous-ensemble de la pluralité de points détectés (501, 504).

**14.** Unité de traitement (101) selon l'une quelconque des revendications précédentes, l'unité de traitement (101) étant conçue pour

- déterminer, sur la base des données de capteur (500), une grille d'occupation (200) de l'environnement du véhicule (100) ;
- détecter, sur la base de la grille d'occupation (200) et en tenant compte de l'objet de caméra (250) à la distance d'objet déterminée par rapport au point de référence (305), un objet d'environnement (550) correspondant à l'objet de caméra (250) dans l'environnement du véhicule (100) ; et
- déterminer, sur la base des données d'image, un ou plusieurs attributs, en particulier un type d'objet parmi une pluralité de types d'objets différents, de l'objet d'environnement (550).

**15.** Procédé (400) de détermination d'informations concernant un objet dans un environnement d'un véhicule (100) ; le procédé (400) consistant à

- déterminer (401) des données d'image qui ont été acquises par une caméra (112) du véhicule (100) ; les données d'image indiquant un environnement du véhicule (100) à partir d'un point de référence (305) ;
- détecter au moins un objet (150) désigné en tant qu'objet de caméra (250) dans l'environnement du véhicule (100) sur la base des données d'image ;
- déterminer (403) des données de capteur (500) d'un capteur d'environnement à détection de distance (111) du véhicule (100) ; les données de capteur (500) indiquant une pluralité de points détectés (501, 504) dans l'environnement du véhicule (100) ; **caractérisé en ce que** le procédé consiste en outre à

- placer (404) l'objet de caméra (250) à une pluralité de distances différentes par rapport au point de référence (305) afin d'examiner différentes hypothèses concernant la distance de l'objet de caméra (250) par rapport au point de référence (305) ;
- déterminer (405) une pluralité de valeurs d'une mesure de chevauchement entre l'objet de caméra (250) placé à chaque distance respective et des points détectés (501, 504) des données de capteur (500) pour la pluralité de distances différentes ; la valeur de la mesure de chevauchement indiquant dans quelle mesure l'objet de caméra (250) placé à la distance respective chevauche des points détectés (501, 504) des données de capteur (500) ; et
- déterminer (406) une distance d'objet de l'objet de caméra (250) par rapport au point de référence (305) en fonction de la pluralité de valeurs de la mesure de chevauchement.

**Fig. 1**

**Fig. 2**

**Fig. 3**

**Fig. 4**

Ermitteln von Bilddaten
401

Detektieren eines Kamera-Objektes auf Basis der Bilddaten
402

Ermitteln von Sensordaten eines abstandssensierenden Umfeldsensors
403

Verändern des Abstands des Kamera-Objektes
404

Ermitteln von Werten eines Überlappungsmaßes für die unterschiedlichen Abstände
405

Ermitteln des Abstands des Kamera-Objektes auf Basis der Werte des Überlappungsmaßes
406

**Fig. 5**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017262716 A1
- WO 03107067 A2